# EUROPEAN PATENT APPLICATION

(11) **EP 3 275 632 A1**
(43) Date of publication of application: **31.01.2018**
(21) Application number: 17177696.6
(22) Date of filing: 23.06.2017
(51) Int. Cl.: B29C 65/08

(54) **METHOD AND APPARATUS FOR ULTRASONIC WELDING**

(30) Priority: 26.07.2016 US 201662367089 P; 02.06.2017 US 201715612434
(71) Applicant: T.A. SYSTEMS, INC., Rochester Hills, MI 48309 (US)
(72) Inventor: BALLOUGH, Matthew E., Clarkston, MI 48348 (US); MARTIN, Thomas J., Romeo, MI 48065 (US)
(74) Representative: Rankin, Douglas

(57) **Abstract**

An ultrasonic welding system (100) including at least one sonic converter (110) including a body and an ultrasonic horn (112), a vibrator (114) disposed in the ultrasonic horn (112), a power source configured to provide electrical power to the vibrator (114), a driver (140) mechanically coupled to the sonic converter (110), the driver (140) being configured to drive the sonic converter (100), a controller (130) including a detected power input (132) and a driver control output (134), the driver control output (134) being connected to a control input of the driver (140), and a first power monitor (122) disposed at one of a vibrator power input and a power source output, and configured to provide a first measured power magnitude to the detected power input (132).

## Description

### TECHNICAL FIELD

The present disclosure relates generally to ultrasonic welding systems and devices, and more specifically to an ultrasonic welding system including an improved control method.

### BACKGROUND

Ultrasonic welding is a welding process used to join plastic parts together by transmitting ultrasonic energy through a specifically designed tool, referred to as an ultrasonic horn, into the plastic parts. The ultrasonic energy is in the form of a mechanical vibration, and creates friction between the plastic parts being welded together. The friction, in turn, generates heat that causes the plastic parts to melt and fuse together.

In existing systems and processes, preset parameters, such as time, depth, speed, and pressure of the ultrasonic horn are used, and the vibrations are controlled via controlling the magnitude of electrical power output from a power source to a converter attached to the ultrasonic horn. In some existing systems, the parameters are inflexible and set prior to the beginning of a weld operation. As a result, the systems are incapable of accounting for and accommodating variations or environmental factors without requiring the weld operation to be reprogrammed. The parameters used by the existing systems require rigorous testing and are also, in some further examples, inefficient.

### SUMMARY OF THE INVENTION

In one exemplary embodiment an ultrasonic welding system includes at least one sonic converter including a body and an ultrasonic horn, a vibrator disposed in the ultrasonic horn, a power source configured to provide electrical power to the vibrator, a driver mechanically coupled to the sonic converter, the driver being configured to drive the sonic converter, a controller including a detected power input and a driver control output, the driver control output being connected to a control input of the driver, and a first power monitor disposed at one of a vibrator power input and a power source output, and configured to provide a first measured power magnitude to the detected power input.

In another example of the above described ultrasonic welding system the controller includes a memory storing instructions for controlling a power output of the power source by adjusting at least one parameter of the driver.

In another example of any of the above described ultrasonic welding systems the at least one parameter includes one of a motor torque and a motor speed.

In another example of any of the above described ultrasonic welding systems the at least one parameter includes a motor torque and a motor speed.

In another example of any of the above described ultrasonic welding systems the power source is one of an electrical generator and an electrical storage component.

In another example of any of the above described ultrasonic welding systems the power monitor is configured to detect an actual power output of the power source.

In another example of any of the above described ultrasonic welding systems the power monitor is an internal power monitor of the power source.

In another example of any of the above described ultrasonic welding systems the driver comprises an articulating arm, and where the at least one sonic converter is coupled to the articulating arm via a servo motor.

In another example of any of the above described ultrasonic welding systems the at least one sonic converter includes a first sonic converter and a second sonic converter, and wherein each sonic converter is connected to the articulating arm via a distinct, independently controllable servo motor.

In another example of any of the above described ultrasonic welding systems the first power monitor is disposed at a power input of the first sonic converter, and wherein a second power monitor is disposed at a power input of the second sonic converter, the second power monitor being configured to provide a second measured power magnitude to the detected power input.

In another example of any of the above described ultrasonic welding systems, a switching relay connects the power source to the first sonic converter and the second sonic converter.

An exemplary method for operating an ultrasonic welding apparatus includes determining a reference output power, comparing an actual output power of at least one power source against the reference output power using a controller, and controlling an ultrasonic weld operation by adjusting at least one operational parameter of a driver of at least one ultrasonic horn in response to the actual output power differing from the reference output power.

In another example of the above described exemplary method for operating an ultrasonic welding apparatus the actual output power of the power source is determined via a power monitor disposed at one of a power source power output and an ultrasonic converter input, and wherein the power monitor provides the monitored actual output power to the controller.

In another example of any of the above described exemplary methods for operating an ultrasonic welding apparatus determining the reference output power comprises receiving the reference output power at a reference input of the controller.

In another example of any of the above described exemplary methods for operating an ultrasonic welding apparatus determining the reference output power comprises retrieving a reference value from a controller memory.

In another example of any of the above described exemplary methods for operating an ultrasonic welding apparatus adjusting at least one operational parameter comprises adjusting a driver torque of the driver.

In another example of any of the above described exemplary methods for operating an ultrasonic welding apparatus adjusting the driver torque of the driver comprises increasing the driver torque in response to the actual output power of the power source being less than the reference power.

In another example of any of the above described exemplary methods for operating an ultrasonic welding apparatus adjusting at least one operational parameter comprises adjusting a speed of the driver.

In another example of any of the above described exemplary methods for operating an ultrasonic welding apparatus adjusting the speed of the driver comprises increasing the speed of the driver in response to the actual output power of the power source being less than the reference power.

In another example of any of the above described exemplary methods for operating an ultrasonic welding apparatus adjusting the at least one operational parameter of the motor affects a corresponding change in the actual output power of the power source.

In another example of any of the above described exemplary methods for operating an ultrasonic welding apparatus the driver includes an articulating arm and at least two servo motors, each of the servo motors being connected to a corresponding ultrasonic horn of the at least one ultrasonic horn, and wherein adjusting the at least one operational parameter of the driver includes locking each of the at least two servo motors and adjusting an operational parameter of the articulating arm according to an actual input power of the ultrasonic horn in the at least one ultrasonic horns that has an actual input power farthest from the reference output power.

In another example of any of the above described exemplary methods for operating an ultrasonic welding apparatus the driver includes an articulating arm and at least two servo motors, each of the servo motors being connected to a corresponding ultrasonic horn of the at least one ultrasonic horn, and wherein adjusting the at least one operational parameter of the driver includes locking one of the servo motors, adjusting at least one operational parameter of the articulating arm in response to the actual power input of the ultrasonic horn connected to the locked servo motor, and adjusting at least one parameter of an unlocked servo motor in response to the actual power input of the ultrasonic horn connected to the unlocked servo motor and in response to the adjusted at least one parameter of the articulating arm.

In another example of any of the above described exemplary methods for operating an ultrasonic welding apparatus the driver includes an articulating arm and at least two servo motors, each of the servo motors being connected to a corresponding ultrasonic horn of the at least one ultrasonic horn, and wherein adjusting the at least one operational parameter of the driver includes adjusting at least one parameter of a first servo motor of the two servo motors in response to an actual input power of an ultrasonic horn corresponding to the first servo motor differing from the reference output power, and adjusting at least one parameter of a second servo motor of sat at least two servo motors in respond to an actual input power of an ultrasonic horn corresponding to the second servo motor differing from the reference output power.

These and other features of the present invention can be best understood from the following specification and drawings, the following of which is a brief description.

### BRIEF DESCRIPTION OF THE DRAWINGS

Figure 1 illustrates a high level schematic view of an exemplary ultrasonic welding system.
Figure 2 is a flowchart demonstrating an Active Control Technology (ACT) control process for an ultrasonic welding operation.
Figure 3 is a flowchart demonstrating a parameter adjustment portion of the ACT control process.
Figure 4 schematically illustrates an alternate ultrasonic welding system utilizing the ACT control process.

### DETAILED DESCRIPTION OF AN EMBODIMENT

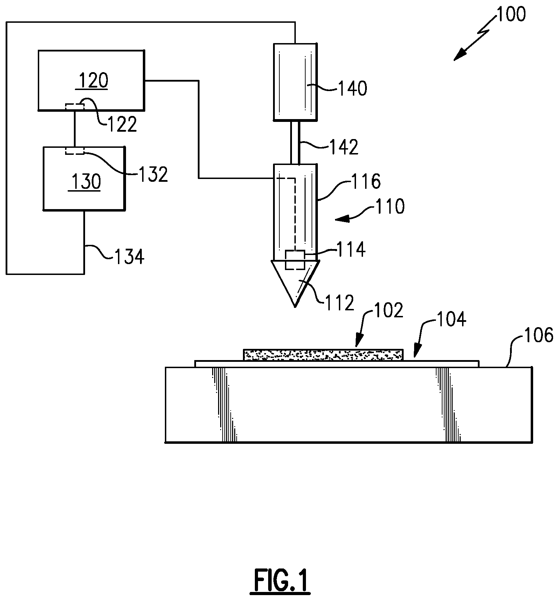

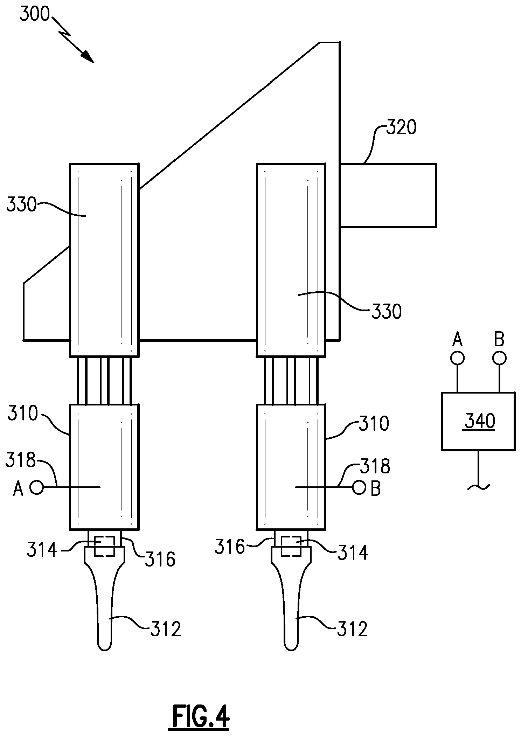

Figure 1 schematically illustrates an exemplary ultrasonic welding system 100 for welding a first plastic part 102 to a second plastic part 104. While illustrated herein as planar plastic sheets, a practical implementation can be adapted to join any two plastic components or any ultrasonic weld compatible materials with minimal modification to the welding system 100. Further, in some examples, shaped anvils may be used in addition to the plastic parts 102, 104 to generate a shaped plastic weld. The ultrasonic welding system 100 includes a sonic converter 110 having a sonic welding horn 112. Also, included in the sonic converter 110 is a vibrator 114, such as a piezoelectric transducer, that converts an electrical power input from an electrical generator 120 into a mechanical vibration. Alternative configurations utilizing more than one sonic converter are envisioned, one example of which is illustrated in Figure 4 and described below.

The example generator 120 includes an internal power monitor 122. The internal power monitor 122 measures the actual output power of the generator 120, and provides the measured value to a controller 130, such as a programmable logic controller or other motion controlling system, by way of detected power input 132. The controller 130 can, in some examples, include a memory storing a reference power value, a control program, or any other required digital information. In alternative examples, a reference power output can be passed to the controller 130 via a control input, or any other known means. During a weld operation, the actual output power of the generator 120 is compared to the reference power output via the controller 130, and the controller 130 controls the overall system 100 to drive the actual output power to match the reference output power using an Active Control Technology (ACT) process, as described below.

The controller 130 further includes a motor control output 134. The motor control output 134 is connected to a control input of a motor 140. While illustrated in the example of Figure 1 as a single control wire, it is to be understood that the motor control output 134 provided from the controller 130 to the motor 140 can utilize any control communication method including multiple control wires, serial communication, and the like. While described with regards to Figure 1 as being a motor control output, the motor control output 134 could, in alternative examples, be any motion control signal configured to control motion of an ultrasonic horn driver. By way of example, the motor control output 134 could be a control signal configured to control an articulating arm, such as the arm 320 illustrated in Figure 4 and described below.

The motor 140 is mechanically connected to the sonic converter 110 via a connection 142, such as a shaft, or multiple shafts. During operation, the motor 140 controls the movement of ultrasonic horn 112 toward and away from the surface of the top plastic part 102, and the pressure exerted by the ultrasonic horn on the plastic parts 102, 104. The rate at which the motor 140 moves the ultrasonic horn 112 toward and away from the surface of the top part is referred to throughout as the motor speed, while the amount of pressure exerted by the ultrasonic horn 112 on the plastic parts 102, 104 is directly related to the torque output by the motor 140.

In the illustrated example, the mechanical connection 142 between the motor 140 and the sonic converter 110 is a rotatable drive shaft. In alternative configurations, the mechanical connection can include automated articulating arms combined with servo motors, thereby providing more articulated motions than the purely linear motion provided by a rotatable drive shaft. The rotatable drive shaft is connected to an exterior surface of a vibrator housing 116 on the sonic converter 110. The motor 140 is driven in response to an electrical signal generated by the controller 130 to rotate the drive shaft one way, causing the vibrator housing 116 and the horn 112 to move away from the motor 140 and toward the parts 102, 104 until the horn 112 contacts the top part 102. After the parts 102, 104 are welded together, the motor 140 is driven in response to another electrical signal from the controller 130 to rotate the drive shaft the opposite way causing the vibrator housing 116 and the horn 112 to move back toward the motor 140 and away from the parts 102, 104.

In order to weld two plastic parts together using the ultrasonic welding system 100, the two parts 102, 104 are placed on top of one another on a surface 106. The ultrasonic horn 112 is then brought into forced contact with the top part 102 while the bottom part 104 is supported on the surface 106. The vibrator 114 within the converter 116 vibrates upon being supplied with electricity from the generator 120, with the magnitude of power output from the generator 120 controlling the vibrations of the vibrator 114. This vibration causes the horn 112 to resonate toward and away from the top part 102. The vibration of the horn 112, relative to the parts 102, 104, (i.e., the transfer of vibratory energy from the horn 112 to the parts 102, 104) creates heat, via friction, which causes melt to fuse parts 102, 104 together.

The controller 130 of the above ultrasonic welding system 100 of Figure 1 controls the ultrasonic welding operation using a process referred to herein as an ACT control method. In the ACT control method, the actual power output of the generator 120 is driven (controlled) to match a reference power by adjusting parameters of the motor 140, or other device for controlling the position and motion of the sonic converter 110, rather than by using direct generator controls 120 as is done in conventional generator controls and existing ultrasonic welding systems. In general terms, the ACT control process alters the speed, torque, or other appropriate parameters of the motor 140 to affect a change in the actual output power of the generator 120, thereby driving the actual output power of the generator 120 to the reference value. In doing so, the ACT control process changes the weld operation parameters to suit a plastic melt index of the plastic parts 102, 104, as well as to suit ambient and environmental conditions that cannot necessarily be accounted for prior to the beginning of the weld operation. By way of example, when dissimilar parts 102, 104 are being fused, or unanticipated environmental factors occur, the output power of the generator 120 will be altered. The ACT system dynamically alters the motor 140 parameters, and the unanticipated factors are accounted for without requiring a user to manually adjust the program for the weld operation.

The ACT control method further allows the system 100 to perform the weld operation at an optimum speed that is adaptable on the fly, without overloading the system 100. The adaption and increased efficiency decreases the overall time required to perform any given weld operation.

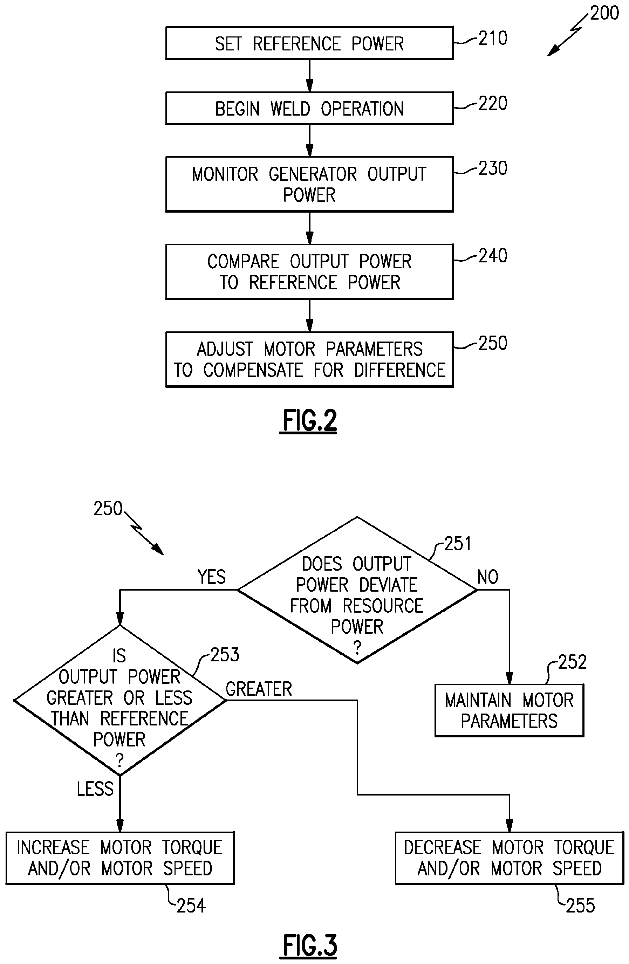

With continued reference to the system of Figure 1, Figure 2 illustrates a flowchart of the ACT method 200. Initially, after a technician has placed the plastic parts 102, 104, as well as any shaping anvils on the surface 106, the controller 130 sets a reference output power of the generator 120 in a "Set Reference Output Power" step 210. The reference output power is, in some examples, set by receiving an input signal from the generator 120 informing the controller 130 of an initial output power of the generator 120. In alternative examples, the reference power can be a value stored within an internal memory of the controller 130, received from a reference power source connected to the controller 130, set by a computer program or other user interface, or determined using any other commercially available means.

Once the reference power has been set, the ACT method 200 begins a weld operation in a "Begin Weld Operation" step 220. The weld operation includes moving the ultrasonic horn 112 into contact with the top plastic part 102, vibrating the ultrasonic horn 112 using the vibrator 114 for a predetermined period of time, energy, distance or combination of and moving the ultrasonic horn 112 away from the top plastic part 102 after the period of time has elapsed.

During the weld operation, the ACT method 200 monitors the actual output power of the generator 120 in a "Monitor Generator Output Power" step 230. In some examples, such as the example illustrated in Figure 1, the generator output power is monitored via an internal generator power monitor 122. In other examples, such as those using alternative electrical power sources, an additional power monitor can be incorporated into the system 100 immediately at the output of the power source, and provide the monitored power to the controller 130. In yet further alternative systems, when the power is provided directly from the power source to the vibrator 114, the power monitor can be positioned at the vibrator 114, or at the sonic converter 110, and provide an accurate reading of the actual output power.

The monitored actual output power is provided to the controller 130, and the controller 130 compares the actual output power of the power source (the generator 120, in the example of Figure 1) to the reference output power in a "Compare Output Power to Reference Power" step 240. If the actual power detected by the power monitor is within a tolerance range of the reference output power, then the ACT method 200 does not adjust the weld operation. If, however, the actual output power is outside of the tolerance range of the reference power, the ACT method 200 adjusts the parameters of the motor 140 to compensate in an "Adjust Motor Parameters to Compensate for Difference" step 250. By adjusting the motor parameters, the controller 130 can increase or decrease the power draw from the power source, thereby maintaining the optimum operational parameters. As referred to herein, the tolerance range of the reference power refers to a range of actual power outputs that are near, but not identical to, the reference output power. By way of non-limiting example, the tolerance range could be +/- 5 watts of the reference power output. Alternative examples can use a broader or narrower tolerance range, depending on the needs of the specific implementation.

During practical operations, steps 230, 240 and 250 are continuously iterated throughout the course of the weld operation, thereby ensuring that optimum weld operation parameters are maintained.

With continued reference to Figure 2, a more detailed example of the "Adjust Motor Parameters to compensate for Difference" step 250 is illustrated in Figure 3. Initially, the step 250 receives the determined comparison from the previous step 240 (see Figure 2), and determines if the output power deviates from the reference power in a "Does Output Power Deviate from Reference power" step 251. If the actual output power from the power source does not deviate from the reference power by more than the tolerance range, then the controller 130 determines that the welding system 100 is operating in an ideal weld operation, and maintains the current motor parameters in a "Maintain Motor Parameters" step 252.

If the actual output power is outside of the tolerance range of the reference output power, the controller 130 determines whether the actual output power is greater than, or less than, the reference power in an "Is Output Power Greater or Less Than Reference Power" step 253. In some examples, the controller 130 further determines a magnitude by which the output power differs from the reference power. In alternative examples, the check is binary and the magnitude of the difference is not determined or utilized.

If the actual output power is greater than the reference power, this is indicative that the motor 140 is outputting more torque than is optimal, or moving faster than is optimal, and the controller 130 decreases the motor torque and/or the motor speed in a "Decrease Motor Torque and/or Motor Speed" step 255. In examples where the magnitude of the difference between the reference output power and the actual output power is determined, the magnitude of the decrease is determined by the controller 130 to correspond to the magnitude of the difference. Alternatively, in the examples where the magnitude of the difference is not determined, or is not utilized, the controller 130 decreases the motor speed and/or torque by a predetermined step amount.

If the actual output power is less than the reference power, this is indicative that the motor 140 is outputting less torque than is optimal, or moving slower than is optimal, and the controller 130 increases the motor torque and/or the motor speed in an "Increase Motor Torque and/or Motor Speed" step 254. As with the Decrease Motor Torque and/or Motor Speed step 253, in examples where the magnitude of the difference between the reference output power and the actual output power is determined, the magnitude of the increase is determined by the controller 130 to correspond to the magnitude of the difference. Alternatively, in the examples where the magnitude of the difference is not determined, the controller 130 increases the motor speed and/or torque by a predetermined step amount.

The specific magnitudes of the adjustments, as well as whether to adjust the torque, motor speed, both, or another motor parameter in response to a difference are dependent on the specific configurations of the ultrasonic welding apparatus. Variations can include, generator model, power source type, ultrasonic welding horn model, vibrator model, motor model, etc. One of skill in the art, having the benefit of the above disclosure, as well as knowledge of the specific ultrasonic welding apparatus, can determine which parameters of the motor to modify, as well as the amount to modify them with.

As a further advantage, the ACT method described herein can account for the utilization of multiple distinct thermoplastics or ultrasonic weldable materials without requiring an operator or user to manually adjust the weld program for the specific material being used. This, in turn, allows a universal welding program to be applied without running the risk of improper welding during the weld operation.

In some examples, the control principles described above can be extrapolated to systems utilizing two or more ultrasonic horns simultaneously in a single weld operation. Figure 4 illustrates a combination of a driver 300 and multiple ultrasonic converters 310 configured to provide an individual or a simultaneous ultrasonic weld from an ultrasonic welding machine.

The system illustrated in Figure 1 utilizes a single motor as the driver for the corresponding ultrasonic horn. However, in systems that have multiple ultrasonic horns 310, each of which operates independently, a more complicated driver 300 is envisioned. The driver 300 includes an articulating arm 320. Multiple servo motors 330 are mounted to the articulating arm 320. Each of the servo motors 330, and the articulating arm 320 are controllably coupled to a controller, such as the controller 130 of Figure 1.

Connected to each of the servo motors 330 is a corresponding ultrasonic converter 310. Each of the ultrasonic converters 310 includes an ultrasonic horn 312, a vibrator 114, and a vibrator housing 116. The ultrasonic converters 310 receive power at a power input 318, which operates the vibrators 314. In some examples, each ultrasonic horn 310 receives power from a dedicated independent power source. In alternative examples, each ultrasonic horn receives power from a single power source, such as an electrical generator.

In the example utilizing multiple power sources, each power input 318 corresponds to the actual power output of the corresponding power sources and the control process described above, with regards to Figures 2 and 3, can be applied to each ultrasonic converter 310.

In alternative examples, a shared power source can be utilized, with the power output from the shared power source being provided to each of the ultrasonic converters 318. In the alternative example, the above control systems are utilized by comparing a received power at each power input 318 against the reference power level, and the controls are applied accordingly. In yet further alternative examples, the shared power source can be connected to each power input 318 via a switching relay 340. In such examples, the switching relay 340 sequentially diverts high voltage current from the power source back and forth between a first converter power input 318 and a second converter power input 318. In further examples utilizing more than two ultrasonic horns 312, the switching relay 340 can be adapted to sequence between all of the corresponding converter power inputs 318.

In the illustrated example including two ultrasonic converters 310, multiple control modes are possible. In a first control mode, both of the servo motors 330 are locked during control operations, and an operational parameter of the articulating arm 320 is modified in response to the comparison between the received input powers 318 and the reference power. In such an example, the controller will have two simultaneous comparisons, one from each ultrasonic converter, and a single point of control in the operational parameters of the articulating arm 320. To compensate for the single point of comparison, the differential used to determine the adjustment of the articulating arm parameters is the greater of the two differences between the power inputs and the reference power.

In an alternative mode, the articulating arm is locked during the control operation, and each servo motor 330 has its parameters adjusted independently in response to the difference between the power input at the corresponding ultrasonic converter and the reference input.

In yet a further alternative mode, one of the servo motors 330 is unlocked, while the other is locked. In this alternative mode, at least one operational parameter of the articulating arm is adjusted in response to the difference between the power input 318 of the locked ultrasonic horn and the reference power output. At the same time, the operating parameters of the servo motor 330 of the unlocked ultrasonic horn 310 is adjusted in response to both the adjustments to the articulating arm 320 and to the difference between the power input 318 of the corresponding ultrasonic horn and the reference power output.

While the illustrated example of Figure 4 utilizes two servo motors 330 and two ultrasonic converters 310, one of skill in the art having the benefit of this disclosure will understand that the varied adjustments to the operating parameters of the articulating arm 320 and the servo motors 330 could be extrapolated to a system including any number of ultrasonic horns and is not limited to the illustrated configuration of Figure 4.

Further, the output power based controls of the welding operation, allow the controller to adjust to different, or varied, melt indexes, without requiring a specific programming or selection of the melt index prior to beginning the weld operation.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. An ultrasonic welding system comprising:
at least one sonic converter including a body and an ultrasonic horn;
a vibrator disposed in said ultrasonic horn;
a power source configured to provide electrical power to the vibrator;
a driver mechanically coupled to the sonic converter, the driver being configured to drive the sonic converter;
a controller including a detected power input and a driver control output, the driver control output being connected to a control input of the driver; and
a first power monitor disposed at one of a vibrator power input and a power source output, and configured to provide a first measured power magnitude to the detected power input.

2. The ultrasonic welding system of claim 1, wherein the controller includes a memory storing instructions for controlling a power output of the power source by adjusting at least one parameter of the driver.

3. The ultrasonic welding system of claim 2, wherein the at least one parameter includes a motor torque and/or a motor speed.

4. The ultrasonic welding system of any preceding claim, wherein the power source is one of an electrical generator and an electrical storage component.

5. The ultrasonic welding system of any preceding claim, wherein the power monitor is configured to detect an actual power output of the power source, and/or wherein the power monitor is an internal power monitor of the power source.

6. The ultrasonic welding system of any preceding claim, wherein the driver comprises an articulating arm, and where the at least one sonic converter is coupled to the articulating arm via a servo motor, and optionally
wherein the at least one sonic converter includes a first sonic converter and a second sonic converter, and wherein each sonic converter is connected to the articulating arm via a distinct, independently controllable servo motor, and further optionally
wherein the first power monitor is disposed at a power input of the first sonic converter, and wherein a second power monitor is disposed at a power input of the second sonic converter, the second power monitor being configured to provide a second measured power magnitude to the detected power input, or
wherein the ultrasonic converter further comprises a switching relay connecting the power source to the first sonic converter and the second sonic converter.

7. A method for operating an ultrasonic welding apparatus comprising:
determining a reference output power;
comparing an actual output power of at least one power source against the reference output power using a controller; and
controlling an ultrasonic weld operation by adjusting at least one operational parameter of a driver of at least one ultrasonic horn in response to the actual output power differing from the reference output power.

8. The method of claim 7, wherein the actual output power of the power source is determined via a power monitor disposed at one of a power source power output and an ultrasonic converter input, and wherein the power monitor provides the monitored actual output power to the controller.

9. The method of claim 7 or 8, wherein determining the reference output power comprises receiving the reference output power at a reference input of the controller.

10. The method of any of the claims 7 to 9, wherein determining the reference output power comprises retrieving a reference value from a controller memory.

11. The method of any of the claims 7 to 10, wherein adjusting at least one operational parameter comprises adjusting a driver torque of the driver, and optionally,
wherein adjusting the driver torque of the driver comprises increasing the driver torque in response to the actual output power of the power source being less than the reference power.

12. The method of any of the claims 7 to 11, wherein adjusting at least one operational parameter comprises adjusting a speed of the driver, and optionally,
wherein adjusting the speed of the driver comprises increasing the speed of the driver in response to the actual output power of the power source being less than the reference power.

13. The method of any of the claims 7 to 12, wherein adjusting the at least one operational parameter of the motor affects a corresponding change in the actual output power of the power source.

14. The method of any of the claims 7 to 13, wherein the driver includes an articulating arm and at least two servo motors, each of said servo motors being connected to a corresponding ultrasonic horn of the at least one ultrasonic horn, and wherein adjusting the at least one operational parameter of the driver comprises:
i. locking each of said at least two servo motors and adjusting an operational parameter of the articulating arm according to an actual input power of the ultrasonic horn in said at least one ultrasonic horns that has an actual input power farthest from the reference output power, or
ii. locking one of said servo motors;
adjusting at least one operational parameter of the articulating arm in response to the actual power input of the ultrasonic horn connected to the locked servo motor; and
adjusting at least one parameter of an unlocked servo motor in response to the actual power input of the ultrasonic horn connected to the unlocked servo motor and in response to the adjusted at least one parameter of the articulating arm, or
iii. adjusting at least one parameter of a first servo motor of said two servo motors in response to an actual input power of an ultrasonic horn corresponding to the first servo motor differing from the reference output power; and
adjusting at least one parameter of a second servo motor of sat at least two servo motors in respond to an actual input power of an ultrasonic horn corresponding to the second servo motor differing from the reference output power.
